# FASCICULE DE BREVET EUROPEEN

(11) **EP 3 328 213 B1**
(45) Date de publication et mention de la délivrance du brevet: **28.08.2019**
(21) Numéro de dépôt: 16760524.5
(22) Date de dépôt: 26.07.2016
(51) Int. Cl.: A23L 3/358, A23L 5/20, B01D 61/02, B01D 61/08, B01D 61/14, B01D 61/18

(54) **PROCÉDÉ ET ÉQUIPEMENT PERMETTANT DE RÉALISER DANS LES MEILLEURES CONDITIONS D'EFFICACITÉ ET D'HYGIÈNE L'ÉTAPE DE DESSALAGE D'ALIMENTS CONSERVÉS PAR SALAISON**
VERFAHREN UND VORRICHTUNG ZUR ENTSALZUNG MIT VERBESSERTER EFFIZIENZ UND HYGIENE BEI DER REDUZIERUNG DES SALZGEHALTES VON DURCH SALZ KONSERVIERTEN LEBENSMITTELN
PROCESS AND APPARATUS FOR IMPROVED EFFICIENCY AND HYGIENE IN THE DESALTING OF FOODS PRESERVED BY SALTING

(30) Priorité: 27.07.2015 FR 1557148
(43) Date de publication de la demande: 06.06.2018
(73) Titulaire: Membrives, Daniel Lucien Joseph, 97490 Sainte-Clotilde - Íle de la Réunion (FR)
(72) Inventeur: Membrives, Daniel Lucien Joseph, 97490 Sainte-Clotilde - Íle de la Réunion (FR)
(74) Mandataire: IP Trust
(86) Numéro de dépôt international: PCT/FR2016/051937
(87) Numéro de publication internationale: WO 2017/017370

(56) Documents cités:
- CN-A- 103 121 760
- FR-A- 1 562 274
- FR-A1- 2 808 166
- JP-A- H0 530 945
- JP-A- S6 371 146
- JP-A- S57 150 342
- US-A1- 2012 267 307

## Description

### Domaine de l'invention

La présente invention concerne le domaine de la préparation d'aliments conservés par salaison.

Le salage (ou salaison) est une méthode de conservation utilisée depuis le moyen-âge, qui se base sur l'utilisation du sel (chlorure de sodium NaCl) pour absorber l'eau présente dans des aliments comme les poissons, la viande, voire les oeufs, des légumes, condiments ou certains fromages... Ce procédé freine considérablement le développement des microbes et des bactéries qui ont besoin d'eau pour se développer. On peut soit plonger les aliments dans de l'eau salée (on parle alors de saumurage), soit recouvrir leur surface de sel (on parle de salage à sec), dans les deux cas, le sel sous la forme NaCl se dissoudra en contact avec l'eau de l'aliment en ions Na+ et Cl- qui ralentissent le développement des bactéries au sein de l'aliment.

Les microorganismes qui provoquent la putréfaction de la viande ont besoin d'eau libre pour se développer. Mis en contact avec l'eau existant dans la chair, le sel se dissout en ions Na+ et Cl-, formant un soluté ; la quantité d'eau disponible pour les microorganismes, mesurable en aw (activité de l'eau, en anglais activity of water), diminue donc. D'autre part, les cellules des microorganismes, placées dans une solution hypertonique, vont perdre de l'eau par le phénomène d'osmose, au point de ne plus pouvoir parfois fonctionner et d'être lysées.

Le sel n'exerce son action bactériostatique qu'à partir de 10 % de concentration ; ce pourcentage permet de se passer de l'entreposage au froid des aliments salés mais implique de devoir dessaler l'aliment avant la cuisson en le lavant et en l'immergeant dans une grande quantité d'eau potable, renouvelée plusieurs fois, durant plusieurs heures, voire pendant un jour entier.

L'invention concerne plus particulièrement le domaine des procédés et des équipements permettant de réaliser dans les meilleures conditions d'efficacité et d'hygiène cette étape essentielle de dessalage des aliments.

### Etat de la technique

On connaît dans l'état de la technique une solution proposée dans les demandes de brevet japonaises JPS6371146 et JPS57150342 décrivent une solution de dessalage où le produit à dessaler est placé dans un emballage constitué par une membrane.

Ces solutions ne sont pas satisfaisantes car la membrane vient en contact avec le produit à dessaler, ce qui perturbe les caractéristiques osmotiques. Par ailleurs, elles ne permettent pas d'homogénéiser la teneur en sel du milieu entourant le produit à dessaler.

La demande de brevet américaine US 20120267307 décrit un procédé de séparation utilisant une membrane osmotique pour l'extraction du solvant d'une première solution pour concentrer le soluté à l'aide d'une seconde solution concentrée qui permet d'extraire le solvant de la première solution par une membrane semi-perméable.

L'utilisation d'une chaleur résiduelle à basse température issue de sources industrielles ou commerciales permet d'améliorer l'efficacité. Un traitement préalable et un traitement postérieur permettent d'optimiser ces procédés utilisant une membrane osmotique.

Cette solution est adaptée à une utilisation industrielle mais pas pour des applications domestiques, où il n'est pas possible de réaliser des prétraitements et post traitements élaborés, ni de gérer de manière appropriée et précise la température.

On connaît également le brevet japonais JPH0530945 ainsi que le brevet chinois CN103121760 décrivant un procédé de prétraitement de dessalement d'eau de mer et un dispositif pour les zones maritimes polluées par osmose inverse. Le schéma technique de l'appareil d'osmose inverse dessalement prétraitement comprend qu'un réservoir de limon de précipitation à la section conique est disposée sur la partie inférieure d'un micro-courant et ultrafiltration corps de réservoir à membrane, une zone de séparation solide et liquide est disposé dans le milieu du micro-courant et d'ultrafiltration réservoir à membrane, et l'eau est alimentée à partir de la zone de séparation des solides et liquides. A l'aide de la structure du dispositif de dessalement prétraitement par osmose inverse, le débit du système de récupération peut être efficacement augmentée, les perturbations sur le composant de membrane de l'impact de l'eau est évitée, la stabilité de la qualité de l'eau de sortie est garantie, l'énergie est économisée et la consommation est réduite.

On connaît encore le brevet français FR1562274 la réextraction de l'uranium à partir de la solution organique avec la formation d'un sel d'uranium insoluble qui précipite, ou le brevet français FR2808166 décrivant une machine pour le dessalage de poissons conservés par salage éventuellement, séchage, en vue de leur consommation plus particulièrement, conçue plus particulièrement pour satisfaire aux besoins des entreprises de restauration ou magasins spécialisés dans la vente de poissons salés. Cette machine comprend a) une cuve dimensionnée pour recevoir une charge poissons à dessaler dans un volume d'eau réfrigérée, b) moyens pour remplacer sélectivement au moins une partie l'eau contenue dans la cuve par de l'eau non salée, des moyens pour commander périodiquement automatiquement le fonctionnement desdits moyens de remplacement, suivant des cycles de fonctionnement prédéterminés en durée et en nombre.

### Inconvénients de l'art antérieur

Les solutions de l'art antérieur présentent différents inconvénients.

La plupart des solutions sont destinés à une mise en oeuvre industrielle, avec des équipements nécessitant un raccordement à une conduite d'arrivée d'eau et à une conduite d'évacuation pour assurer la circulation de l'eau destinée au dessalage. Certains des équipements de l'art antérieur nécessitent également un raccordement électrique pour assurer l'alimentation des électrodes de dialyse.

Ces solutions sont par ailleurs très consommatrices d'eau, ce qui constitue un réel problème pour la mise en oeuvre dans des régions où l'accès à l'eau potable est limité. Or il se trouve que la conservation des aliments par salaison est usuelle dans nombre de telles régions.

Par ailleurs, les solutions de l'art antérieur ne permettant pas de garantir une constance des caractéristiques organoleptiques, nutritionnelles et sanitaires des produits traités.

### Solution apportée par l'invention

Afin de répondre à ces inconvénients, la présente invention concerne dans son acception la plus générale, en premier lieu un équipement de dessalage selon la revendication 1. Cet équipement de dessalage est constitué par au moins un récipient et une membrane osmotique séparant un premier volume destiné à recevoir un premier bain et le produit alimentaire à dessaler, et un second volume, caractérisé en ce que ledit équipement est constitué par un récipient présentant une fenêtre s'ouvrant sur une membrane osmotique, et par un panier présentant un fond et/ou une paroi perforée, pour recevoir les aliments à dessaler, le récipient présentant dans sa partie inférieure des épaulements pour positionner le panier au-dessus d'un volume inférieur du récipient.

Selon une forme de réalisation, ledit équipement de dessalage est constitué par deux récipient emboîtables, l'un présentant une paroi osmotique et présentant une forme extérieure permettant de le plonger partiellement dans le second récipient.

Selon une autre forme de réalisation, ledit équipement de dessalage comporte un capteur pour mesurer le taux de salinité et un circuit pour délivrer un signal de fin de de procédé en fonction du niveau fourni par ledit capteur.

L'invention concerne en second lieu un procédé de dessalage d'un produit alimentaire consistant à placer ledit produit alimentaire dans un tel équipement, ledit équipement étant constitué par un récipient présentant une fenêtre s'ouvrant sur une membrane osmotique séparant un premier volume destiné à recevoir un premier bain et le produit alimentaire à dessaler, et un second volume, et par un panier présentant un fond et/ou une paroi perforée, pour recevoir les aliments à dessaler, le récipient présentant dans sa partie inférieure des épaulements pour positionner le panier au-dessus d'un volume inférieur du récipient.

Selon une forme de réalisation dudit procédé, le procédé comporte une étape de mesure de la salinité pour déclencher la fin du processus lorsque le résultat de la mesure atteint une valeur seuil.

Cet équipement permet d'optimiser le dessalage de produits conservés par salaison, tels que la morue, en termes de gain de temps et de consommation d'eau et d'énergie. Il permet aussi la simplification des étapes de dessalage, la préservation des propriétés des produits traités. Il vise à rendre reproductible de dessalage en garantissant l'obtention de qualité souhaitée homogène.

Il permet une mise en oeuvre à température ambiante, sans nécessiter de moyens de chauffage ou de réfrigération.

La maîtrise de l'équipement de dessalage obtenu par la mise en oeuvre de l'invention permet d'apporter des garanties en termes de sécurité sanitaire des aliments dessalés. De plus, la maîtrise sanitaire (contaminations croisées) sera mieux garantie.

L'acceptabilité par le consommateur est améliorée et pour les régimes hyposodés, les produits du dessalage apporteront un taux de sel nettement mieux contrôlable par les consommateurs, les patients et les professionnels.

### Description détaillée d'un exemple non limitatif de réalisation

L'invention sera illustrée dans ce qui suit par une description détaillée d'un exemple non limitatif de réalisation et de mise en oeuvre, se référant aux dessins annexés où :
- la figure 1 représente une vue schématique, en perspective, d'un équipement de dessalage selon l'invention
- la figure 2 représente les courbes d'évolution de la salinité
- les figures 3 à 6 représentent des vues en perspectives d'une variante de réalisation.

L'invention se rapporte au dessalage de tout type de produit alimentaire conservé par salaison, et particulièrement la morue.

La cuisine traditionnelle réunionnaise, par exemple, comporte une étape de dessalage dans l'eau de denrées comme la morue, généralement longue, pour obtenir un goût (saveur salé) accepté par les consommateurs dans les plats cuisinés.

Cette étape est très consommatrice d'eau et diminue la qualité organoleptique de la morue ; diminution qui est accentuée par le procédé de dessalage par ébouillantage.

L'invention décrite dans ce qui suit à titre d'exemple concerne une machine à dessaler, sous la forme d'un petit équipement ménager simple, fonctionnel et accessible permettant d'optimiser le dessalage de denrées alimentaires et d'obtenir des aliments qui soient qualitativement homogènes.

Cet équipement se fixe comme objectifs de réduire la consommation en eau et/ou en énergie tout en apportant des solutions en termes de praticité (simplicité d'utilisation, gain de temps au dessalage) et en optimisant les caractéristiques organoleptiques, nutritionnelles et sanitaires des produits traités.

Le procédé mis en oeuvre par cet équipement est basé sur l'optimisation du procédé de transfert sélectif de sel par osmose inverse. Le procédé combine les avantages de la dialyse et une membrane de sélectivité (nano filtration ou filtration). Les principaux paramètres qui modifient la vitesse de transfert soluté/solution et permettent de préserver les qualités gustatives et nutritionnelles de la morue dessalée, seront optimisés :
- sélectivité de la membrane,
- introduction d'une grille évitant au produit de toucher le fond du récipient,
- mise au point d'un procédé d'agitation,
- adjonction dans la membrane ou dans une zone ad hoc de l'équipement d'arômes/minéraux d'intérêt (K+).
L'équipement correspondant à un exemple de réalisation est constitué par une cuve (1) en plastique ou métallique, à l'intérieur de laquelle est placée une cloison (4) munie d'une membrane semi-perméable, et définissant deux compartiments (2, 3).

Au départ, la cuve est remplie d'un soluté, par exemple de l'eau, remplissant les deux compartiments (2, 3) séparés par la membrane semi-perméable (4).

La membrane semi-perméable est un matériau connu de l'homme du métier, pour la réalisation de traitements d'osmose Inverse (RO), de nanofiltration (NF), d'ultrafiltration (UF) ou de microfiltration (MF), par exemple des membranes polymères organiques synthétiques de type :
- membrane de microfiltration ou ultrafiltration polymères choisi notamment parmi les poly (vinylidene fluoride), polysulfone, poly(acrylonitrile) and poly (acrylonitrile)-poly (vinyl chloride) copolymères, etc.
- membrane d'osmose inverse en acétate de cellulose ou polysulfone enduit de polyamides aromatiques
- membrane de nanofiltration en acétate de cellulose ou polysulfone enduit de polyamides aromatiques.

Lorsqu'on plonge un aliment salé dans l'un des compartiments (2), le degré de salinité augmente par rapport à la salinité du soluté originel. Le soluté contenu par la cuve se diffuse par osmose vers le liquide le plus concentré du compartiment (2) dans lequel est plongé l'aliment à dessaler pour le diluer. En appliquant une pression suffisante sur le liquide concentré contenu dans le compartiment (2), de l'ordre de 3 bars, la diffusion de l'eau est alors inversée. On parvient mécaniquement à inverser l'écoulement et à séparer la solution concentrée de ses constituants : l'eau et les éléments dissous dans celle-ci. De préférence, le soluté est refroidi à une température inférieure à la température ambiante, par exemple entre 3 et 10 °C et préférentiellement 5°C.

De préférence, le pH du soluté est compris entre 4 et 5.

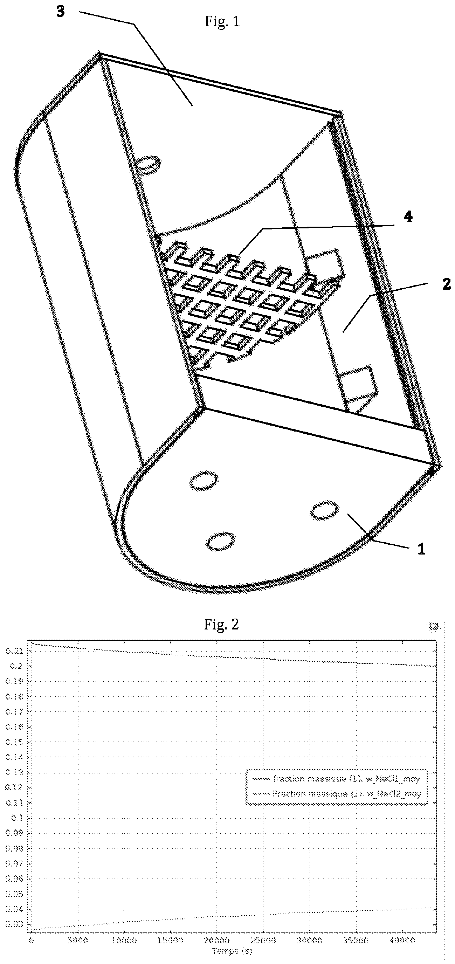

La figure 2 montre l'évolution de la salinité en fonction du temps, respectivement dans le compartiment (2) dans lequel est plongé à l'instant T₀ l'aliment à dessaler, soumis à une pression de trois bars, et le compartiment (3) contenant au départ seulement le soluté.

Au départ, le soluté est de l'eau à 5°C et l'eau contenu dans le compartiment (2) dans lequel est plongé l'aliment à dessaler voit sa salinité augmenter à un coefficient Wₒ NaCl de 0,22.

Ce coefficient baisse ensuite, comme le montre la courbe supérieure, pour atteindre un taux de 0,2 après 4000 secondes, alors que le soluté voit son coefficient passer de 0 à 0,04 (courbe inférieure).

En plaçant un capteur de salinité dans le compartiment (3), on obtient une information directe sur l'avancement du processus de désalinisation. Un tel capteur est par exemple un conductimètre délivrant un signal électrique représentatif de la conductivité électrique du soluté contenu dans le compartiment (3) ou encore un réfractomètre ou un densimètre.

Le capteur de salinité délivre un signal électrique qui est traité par un circuit électronique comparant périodiquement la valeur de ce signal avec une valeur de référence pour déterminer le degré d'avancement du processus et commander l'arrêt de l'équipement lorsque le produit alimentaire est prêt à sa consommation ou son utilisation.

La solution décrite dans ce qui précède constitue un simple exemple de réalisation. De nombreuses autres variantes peuvent être réalisées, pour former autour de l'aliment à dessaler un volume de dessalage séparé d'un volume de soluté par une membrane semi-permanente.

### Description d'une variante de réalisation

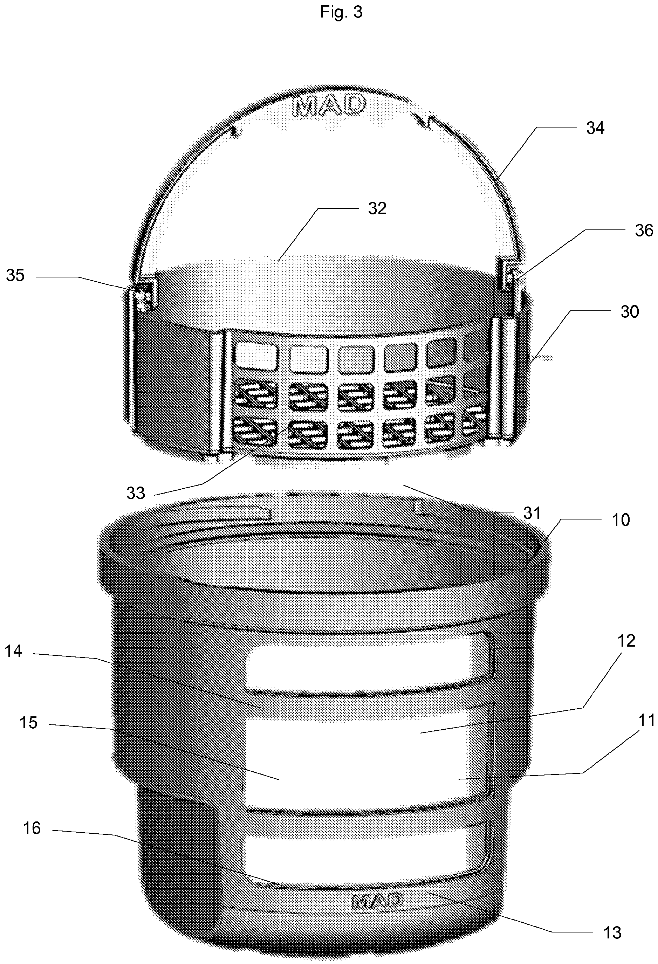

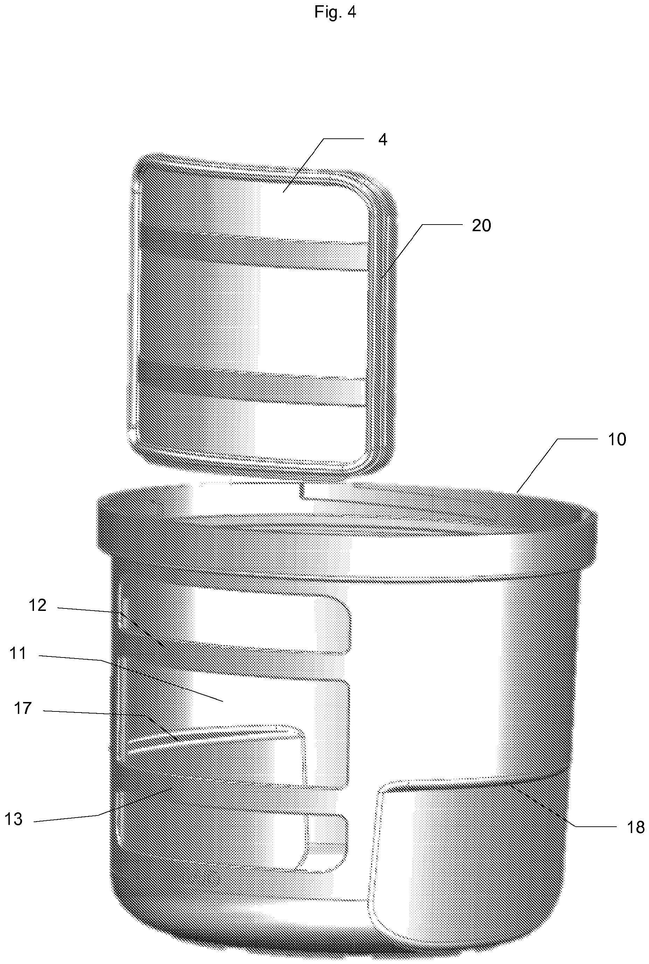

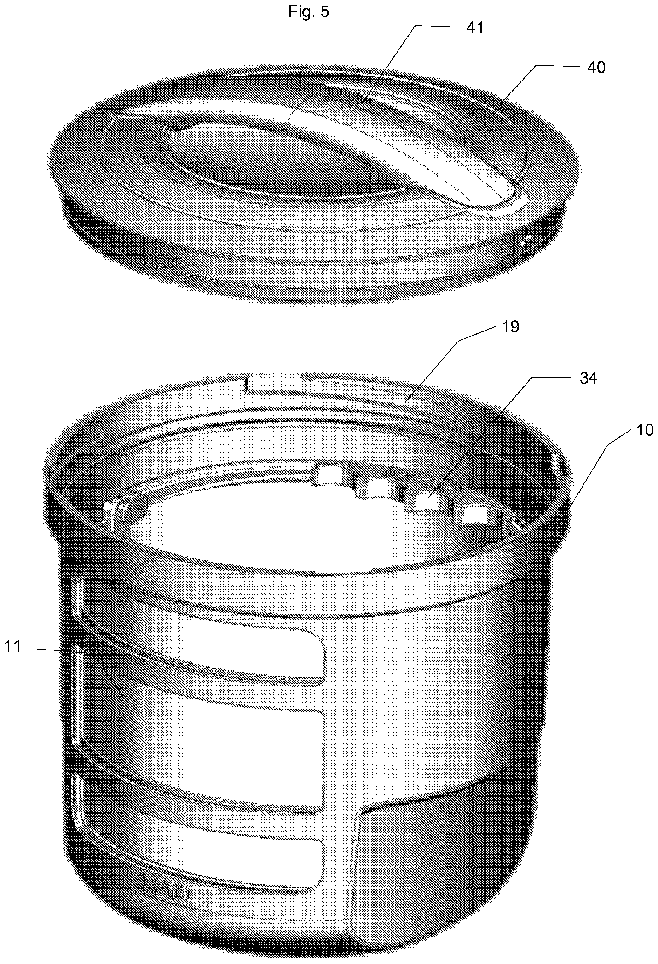

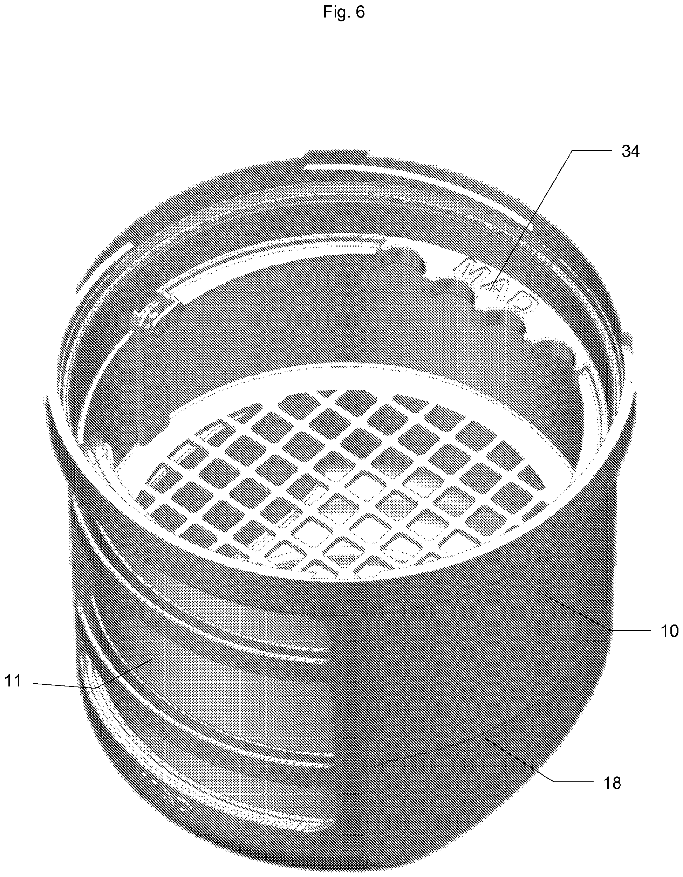

Les figures 3 à 6 concernent une variante de réalisation constituée d'un récipient (10) cylindrique dont la paroi latérale présente une ouverture (11) s'étendant sur les trois-quarts de la hauteur et sur une largeur d'environ 90°. Deux bandes (12, 13) semi-annulaire traversent cette fenêtre pour améliorer la rigidité du récipient et définissent des fenêtres 14, 15, 16).

Un cadre (20) supportant une membrane osmotique (4) est placé derrière cette ouverture (11). Le récipient (10) comporte deux glissières verticales disposées de part et d'autre de l'ouverture (11) pour permettre l'introduction et le retrait de ce cadre (20) par un simple glissement vertical, par exemple pour remplacer la membrane osmotique (4).

Cette membrane osmotique (4) est ainsi placée entre le volume intérieur du récipient (10), et un volume extérieur dans lequel est plongé le récipient et contenant de l'eau.

Les aliments à dessaler sont disposés dans un panier (30) présentant un fond ajouré (31), avec des perforations permettant le passage du liquide contenu dans le récipient (10) mais empêchant le passage de l'aliment. Typiquement, le fond (31) présente des trous d'une section de 10 à 30 millimètres. Le panier (30) présente une bordure périphérique (32) pleine sur les trois-quarts de son périmètre et ajourée au niveau d'une zone (33) correspondant à la fenêtre (11) du récipient (10). Ce panier (30) présente des dimensions permettant de l'introduire dans la partie supérieure du récipient (10), où il repose sur des épaulements (17, 18) disposés de part et d'autre de la fenêtre (11).

Le panier (30) présente une anse (34) rabattable grâce à deux articulations (35, 36).

Lorsque le panier (30) rempli d'aliments à dessaler est introduit dans le récipient (10), et que ce dernier est plongé dans un récipient contenant de l'eau, les échanges osmotiques se font au travers de la membrane (4) supportée par le cadre (20). Le récipient (10) permet l'échange entre le liquide dans lequel sont plongés les aliments contenus dans le panier (30) d'une part directement via la paroi ajourée (33) du panier, se trouvant en face de la partie supérieure de l'ouverture (11), et d'autre part via le fond ajouré (31) du panier et la partie inférieure de l'ouverture (11).

Le récipient (10) peut être fermé par un couvercle (40) muni d'une poignée (41) et d'une virole interagissant avec une glissière hélicoïdale (19) prévue sur la surface intérieure de la bordure supérieure du récipient (10). Cette glissière présente à son extrémité une butée avec une zone rétrécie pour assurer un maintien de la virole. Le couvercle peut être libéré en exerçant un couple de torsion assurant le déblocage de la virole, puis le dévissage jusqu'à la sortie de la glissière (19), permettant alors de retirer le couvercle.

## Revendications

1. Équipement de dessalage constitué par au moins un récipient et une membrane osmotique séparant un premier volume destiné à recevoir un premier bain et le produit alimentaire à dessaler, et un second volume, **caractérisé en ce que** ledit équipement est constitué par un récipient (10) présentant une fenêtre (11) s'ouvrant sur une membrane osmotique (4), et par un panier (30) présentant un fond et/ou une paroi perforée, pour recevoir les aliments à dessaler, le récipient présentant dans sa partie inférieure des épaulements (17, 18) pour positionner le panier (30) au-dessus d'un volume inférieur du récipient (10).

2. Équipement de dessalage selon la revendication 1 **caractérisé en ce que** qu'il est constitué par deux récipients emboîtables, l'un présentant une paroi osmotique et présentant une forme extérieure permettant de le plonger partiellement dans le second récipient.

3. Équipement de dessalage selon l'une au moins des revendications 1 ou 2 **caractérisé en ce qu'**il comporte un capteur pour mesurer le taux de salinité et un circuit pour délivrer un signal de fin de procédé en fonction du niveau fourni par ledit capteur.

4. Procédé de dessalage d'un produit alimentaire consistant à placer ledit produit alimentaire dans un équipement constitué par un récipient (10) présentant une fenêtre (11) s'ouvrant sur une membrane osmotique (4) séparant un premier volume destiné à recevoir un premier bain et le produit alimentaire à dessaler, et un second volume, et par un panier (30) présentant un fond et/ou une paroi perforée, pour recevoir les aliments à dessaler, le récipient présentant dans sa partie inférieure des épaulements (17, 18) pour positionner le panier (30) au-dessus d'un volume inférieur du récipient (10).

5. Procédé selon la revendication précédente **caractérisé en ce qu'**il comporte une étape de mesure de la salinité pour déclencher la fin du processus lorsque le résultat de la mesure atteint une valeur seuil.

## Patentansprüche

1. Entsalzungsvorrichtung bestehend aus zumindest einem Behälter und einer Osmosemembran, die ein erstes Volumen zur Aufnahme eines ersten Tauchbads und des zu entsalzenden Produkts, und ein zweites Volumen voneinander trennt, **dadurch gekennzeichnet, dass** die Vorrichtung aus einem Behälter (10) besteht, der ein Fenster (11) aufweist, das sich zu einer Osmosemembran (4) hin öffnet, und aus einem Korb (30) mit einem Boden und/oder einer perforierten Wand zur Aufnahme der zu entsalzenden Lebensmittel, wobei der Behälter in seinem unteren Teil Schultern (17, 18) aufweist, um den Korb (30) auf einem unteren Volumen des Behälters (10) zu positionieren.

2. Entsalzungsvorrichtung nach dem Anspruch 1, **dadurch gekennzeichnet, dass** er aus zwei ineinander steckbaren Behältern besteht, wobei einer eine Osmosewand aufweist und eine Außenform hat, die das teilweise Eintauchen in den zweiten Behälter ermöglicht.

3. Entsalzungsvorrichtung nach zumindest einem der Ansprüche 1 oder 2, **dadurch gekennzeichnet, dass** sie einen Sensor zum Messen des Salzgehalts und eine Schaltung zum Erzeugen eines Signals am Ende des Verfahrens entsprechend dem vom Sensor gemeldeten Stand umfasst.

4. Verfahren zur Entsalzung eines Lebensmittelprodukts, bei dem das Lebensmittelprodukt in eine Vorrichtung platziert wird, die aus einem Behälter (10) besteht, der ein Fenster (11) aufweist, das sich zu einer Osmosemembran (4) hin öffnet, die ein erstes Volumen zur Aufnahme eines erstes Tauchbads und des zu entsalzenden Lebensmittelprodukts und ein zweites Volumen voneinander trennt, und aus einem Korb (30), der einen Boden und/oder eine perforierte Wand aufweist, um die zu entsalzenden Lebensmittel aufzunehmen, wobei der Behälter in seinem unteren Teil Schultern (17, 18) aufweist, um den Korb (30) auf ein unteres Volumen des Behälters (10) zu positionieren.

5. Verfahren nach dem vorhergehenden Anspruch, **dadurch gekennzeichnet, dass** es einen Schritt der Messung des Salzgehalts umfasst, um das Ende des Verfahrens auszulösen, wenn das Messergebnis einen Grenzwert erreicht.

## Claims

1. Desalting equipment consisting of at least one container and an osmotic membrane separating a first volume intended for receiving a first bath and the food product to be desalted, and a second volume, **characterized in that** said equipment consists of a container (10) having a window (11) opening onto an osmotic membrane (4) and of a basket (30) having a bottom and/or a perforated wall, intended for receiving the food products to be desalted, with said container having, in its lower part, shoulders (17, 18) for positioning said basket (30) above a lower volume of the container (10).

2. Desalting equipment according to claim 1, **characterized in that** it consists of two modular containers, one having an osmotic wall and having an outer shape making it possible to partially immerse same into the second container.

3. Desalting equipment according to at least one of claims 1 or 2, **characterized in that** it comprises a sensor for measuring the salinity level and a circuit for supplying a process completion signal based on the level provided by said sensor.

4. A method for desalting a food product consisting in placing said food product in a first piece of equipment consisting of a container (10) having a window (11) opening onto an osmotic membrane (4) separating a first volume intended for receiving a first bath and the food product to be desalted, and a second volume, and of a basket (30) having a bottom and/or a perforated wall, intended for receiving the food products to be desalted, with said container having, in its lower part, shoulders (17, 18) for positioning said basket (30) above a lower volume of the container (10).

5. A method according to the preceding claim, **characterized in that** it comprises a step of measuring the salinity level to trigger the termination of the process when the result of the measurement reaches a threshold value.
